# EUROPÄISCHE PATENTSCHRIFT

(11) **EP 2 995 797 B1**
(45) Veröffentlichungstag und Bekanntmachung des Hinweises auf die Patenterteilung: **05.06.2019**
(21) Anmeldenummer: 15001209.4
(22) Anmeldetag: 23.04.2015
(51) Int. Cl.: F02B 29/04, F02M 31/20, F28F 9/02, F28F 17/00, F02M 25/028

(54) **LADELUFTKÜHLERANORDNUNG MIT KONDENSATABSAUGUNG UND VERSCHWENKBAREM LADELUFTKÜHLER**
CHARGE AIR COOLER ASSEMBLY WITH CONDENSATE SUCTION AND PIVOTABLE CHARGE AIR COOLER
SYSTÈME REFROIDISSEUR D'AIR DE SURALIMENTATION DOTÉ D'UN SYSTÈME D'ASPIRATION DE CONDENSAT ET REFROIDISSEUR D'AIR DE SURALIMENTATION PIVOTABLE

(30) Priorität: 11.09.2014 DE 102014013502
(43) Veröffentlichungstag der Anmeldung: 16.03.2016
(73) Patentinhaber: MAN Truck & Bus AG, 80995 München (DE)
(72) Erfinder: Neff, Andreas, 81247 München (DE); Böhm, Martin, 90559 Burgthann (DE)
(74) Vertreter: Kotitschke, Bernd

(56) Entgegenhaltungen:
- WO-A1-2009/130083
- DE-A1- 3 545 336
- DE-A1-102007 061 049
- DE-A1-102011 056 617
- FR-A1- 2 922 962
- US-A1- 2011 107 760
- US-A1- 2013 306 040

## Beschreibung

Die Erfindung betrifft eine Ladeluftkühleranordnung für ein Kraftfahrzeug, vorzugsweise Nutzfahrzeug, insbesondere Omnibus oder Lastkraftwagen.

Im Stand der Technik sind Ladeluftkühleranordnungen für Kraftfahrzeuge in den unterschiedlichsten Ausführungsformen bekannt. Problematisch ist, dass sich in den Ladeluftkühlern während des Betriebs Kondensat bilden kann und bei niedrigen Außentemperaturen die Funktion des Ladeluftkühlers oder allgemein des Verbrennungsmotors des Kraftfahrzeugs beeinträchtigen kann und zudem die Ladeluftkühler zu Reinigungszwecken verschwenkbar sein sollen, ohne dass der Ladeluftkreis geöffnet werden muss, was wegen dem üblicherweise starren Ladeluftkühler-Rohrsystem nicht oder zumindest nicht ohne weiteres möglich ist. Aus der WO 2009/130083 A1 ist ein Kühler bekannt, mit einer Verbindungskonstruktion von der Auslassseite des Kühlers zu der Einlassseite des Kühlers. Ferner kann zum Stand der Technik noch auf die DE 10 2011 056 617 A1 und die DE 35 45 336 A1 verwiesen werden.

Eine Aufgabe der Erfindung ist es, eine Ladeluftkühleranordnung für ein Kraftfahrzeug zu schaffen, die einerseits das Problem der Kondensatbildung entkräftet und zugleich ermöglicht, den Ladeluftkühler einfach zu reinigen oder zu warten.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Ladeluftkühleranordnung für ein Kraftfahrzeug, vorzugsweise ein Nutzfahrzeug, insbesondere einen Omnibus oder einen Lastkraftwagen.

Die Ladeluftkühleranordnung umfasst einen Ladeluftkühler.

Die Ladeluftkühleranordnung zeichnet sich dadurch aus, dass eine zumindest abschnittsweise flexible Verbindungskonstruktion, z. B. eine Verbindungs- und/oder Bypassleitung, von der Auslassseite des Ladeluftkühlers, also vorzugsweise einem Niederdruckbereich, abzweigt und auf der Einlassseite des Ladeluftkühlers, also vorzugsweise einem Hochdruckbereich, mündet, um mittels eines Druckgefälles zwischen der Einlass- und der Auslassseite des Ladeluftkühlers Kondensat auf der Einlassseite des Ladeluftkühlers zweckmäßig zur Auslassseite des Ladeluftkühlers abzusaugen.

Die Ladeluftkühleranordnung zeichnet sich darüber hinaus dadurch aus, dass der Ladeluftkühler eine Montageeinrichtung zum Verschwenken des Ladeluftkühlers umfasst, so dass der Ladeluftkühler verschwenkbar ist, ohne den Ladeluftkreis zu öffnen.

Der Ladeluftkühler ist vorzugsweise um ≥ 30°, ≥ 45°, ≥ 60°, ≥ 90° oder sogar ≥ 135° verschwenkbar.

Der Ladeluftkühler umfasst vorzugsweise eine Einlasskammer für zu kühlende Luft und/oder eine Auslasskammer für gekühlte Luft.

Die Einlasskammer und/oder die Auslasskammer ist vorzugsweise zusammen mit dem Ladeluftkühler verschwenkbar.

Die Einlasskammer dient zweckmäßig dazu, zu kühlende Luft im Wesentlichen gleichmäßig über den Querschnitt des Ladeluftkühlers zu verteilen. Die zu kühlende Luft wird vorzugsweise von einer Einlassleitung des Ladeluftkühlers in die Einlasskammer geführt.

Die Auslasskammer dient zweckmäßig dazu, gekühlte Luft zu sammeln und zu einer Auslassleitung des Ladeluftkühlers zu leiten.

Es ist möglich, dass die Verbindungskonstruktion von einer Auslassleitung des Ladeluftkühlers, z. B. einem Auslassrohr oder einem Auslassschlauch des Ladeluftkühlers, der Auslasskammer des Ladeluftkühlers oder einem Ansaugkrümmer abzweigt, um zweckmäßig Kondensat dorthin abzusaugen. Alternativ oder ergänzend kann die Verbindungskonstruktion z. B. in der Einlasskammer münden, um zweckmäßig Kondensat von dort abzusaugen.

Die Verbindungskonstruktion dient insbesondere dazu, Kondensat auf der Einlassseite des Ladeluftkühlers, insbesondere aus der Einlasskammer, zur Auslassseite des Ladeluftkühlers, insbesondere zur Auslassleitung, abzusaugen.

Die Verbindungskonstruktion mündet vorzugsweise in der Einlasskammer, um zweckmäßig Kondensat aus der Einlasskammer abzusaugen. Die Einlasskammer kann z. B. eine schräge Wandung aufweisen und die Verbindungskonstruktion kann zweckmäßig in einem unteren Bereich der schrägen Wandung, vorzugsweise dem untersten Bereich der schrägen Wandung, in der Einlasskammer münden. Die Wandung ist vorzugsweise eine Bodenwandung. Sie kann muss aber nicht die unterste Bodenwandung der Einlasskammer sein.

Es ist möglich, dass der Ladeluftkühler, insbesondere die Einlasskammer, eine Sammeltasche für das Kondensat aufweist, z. B. eine Vertiefung, Nische, Mulde, Kammer etc., und die Verbindungskonstruktion in oder zumindest benachbart zu der Sammeltasche mündet.

Die Verbindungskonstruktion umfasst einen flexiblen Schlauch oder kann zweckmäßig schlauchförmig ausgeführt sein.

Die Ladeluftkühleranordnung umfasst zweckmäßig eine Einlassleitung zur Zuführung von Luft an den Ladeluftkühler, insbesondere die Einlasskammer.

Es ist möglich, dass die Verbindungskonstruktion und die Einlassleitung benachbart zueinander münden, z. B. in der Einlasskammer.

Die Verbindungskonstruktion kann z. B. als zweckmäßig zumindest abschnittsweise schlauchförmige Bypass- und/oder Verbindungsleitung ausgeführt sein.

Die Verbindungskonstruktion ist vorzugsweise klappen- und/oder ventilfrei ausgeführt.

Die Verbindungskonstruktion dient zweckmäßig zur Kondensatabsaugung mittels eines Druckgefälles, das insbesondere im Betrieb zwischen der Einlassseite des Ladeluftkühlers und der Auslassseite des Ladeluftkühlers herrscht.

Das Druckgefälle herrscht somit insbesondere zwischen der Einlassseite des Ladeluftkühlers (hoher Druck) und somit dem einen Ende der Verbindungskonstruktion und der Auslassseite des Ladeluftkühlers (niedriger Druck) und somit dem anderen Ende der Verbindungskonstruktion.

Die Auslassleitung des Ladeluftkühlers und/oder die Einlassleitung des Ladeluftkühlers kann als vorzugsweise im Wesentlichen starre Rohrkonstruktion ausgeführt sein.

Es ist möglich, dass der Innendurchmesser zumindest an der Stelle der Auslassleitung, von der die Verbindungskonstruktion abzweigt, zumindest achtmal so groß ist, wie der Innendurchmesser der Verbindungskonstruktion.

Die Verbindungskonstruktion kann abschnittsweise starr ausgeführt sein, z. B. steif, nicht oder wenig flexibel und/oder als Rohrelement.

Die Verbindungskonstruktion erstreckt sich abschnittsweise siphonförmig, insbesondere abschnittsweise im Wesentlichen U-förmig, um zweckmäßig eine Siphonfunktion zur Verfügung stellen zu können.

Die Abzweigstelle der Verbindungskonstruktion auf der Auslassseite des Ladeluftkühlers ist auf einem höheren Niveau angeordnet als die Mündungsstelle der Verbindungskonstruktion auf der Einlassseite des Ladeluftkühlers.

Zu erwähnen ist, dass die Einlassseite des Ladeluftkühlers insbesondere einen Bereich mit hohem Druck umfasst (z. B. Einlassleitung, Einlasskammer etc.) und/oder die Auslassseite des Ladeluftkühlers insbesondere einen Bereich mit niedrigem Druck umfasst (z. B. Auslassleitung, Auslasskammer, Ansaugkrümmer etc.).

Die Erfindung ist nicht auf eine Ladeluftkühleranordnung beschränkt, sondern umfasst auch ein Nutzfahrzeug, vorzugsweise einen Omnibus oder einen Lastkraftwagen, mit einer Ladeluftkühleranordnung wie hierin offenbart.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit der beigefügten Figur.

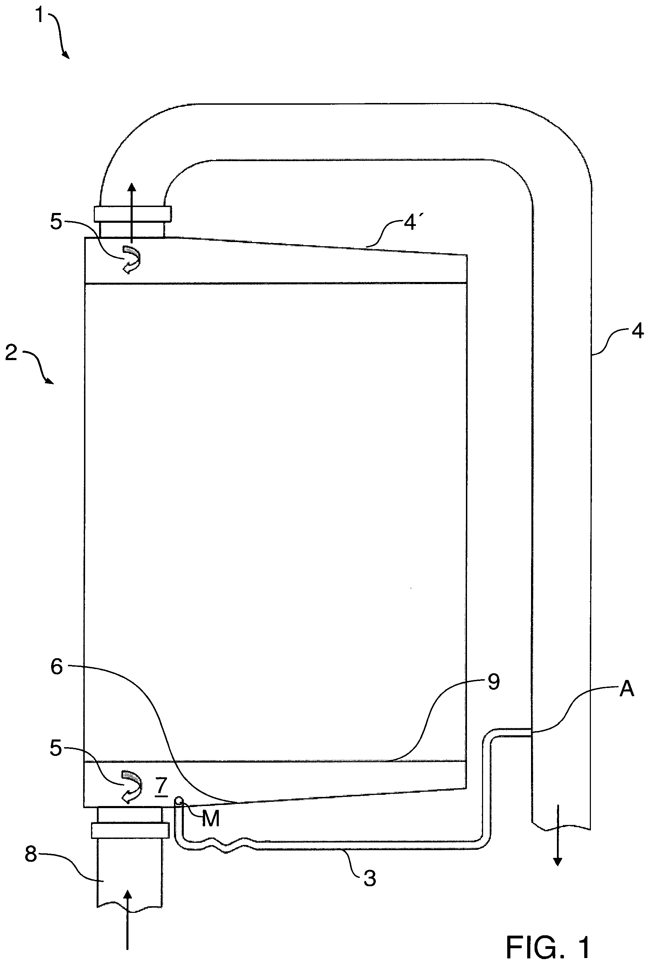

- Figur 1: zeigt eine Ansicht einer Ladeluftkühleranordnung gemäß einer Ausführungsform der Erfindung.

Figur 1 zeigt eine Ansicht einer Ladeluftkühleranordnung 1 für ein Kraftfahrzeug, vorzugsweise ein Nutzfahrzeug, z. B. einen Omnibus oder einen Lastkraftwagen.

Die Ladeluftkühleranordnung 1 umfasst einen Ladeluftkühler 2. Der Ladeluftkühler 2 weist eine Einlasskammer 9 für zu kühlende Luft und eine Auslasskammer 4' für gekühlte Luft auf. Eine Verbindungskonstruktion 3, die zweckmäßig abschnittsweise flexibel und abschnittsweise im Wesentlichen starr ausgeführt ist, zweigt von der Auslassseite des Ladeluftkühlers 2 (Abzweigstelle A), insbesondere der Auslassleitung 4 des Ladeluftkühlers 2, ab, und mündet auf der Einlassseite des Ladeluftkühlers 2 (Mündungsstelle M), insbesondere der Einlasskammer 9. Sie kann allerdings auch z. B. von der Auslasskammer 4' des Ladeluftkühlers 2 oder einem nicht gezeigten Ansaugkrümmer abzweigen.

Die Verbindungskonstruktion 3 dient dazu, im Betrieb im Ladeluftkühler 2, insbesondere in der Einlasskammer 9 (Einlassseite des Ladeluftkühlers 2) entstehendes Kondensat zur Auslassleitung 4 (Auslassseite des Ladeluftkühlers 2) abzusaugen. Die Kondensatabsaugung von der Einlassseite zu der Auslassseite des Ladeluftkühlers 2 erfolgt mittels eines Druckgefälles, das im Betrieb zwischen der Einlassseite des Ladeluftkühlers 2 (hoher Druck) und somit dem einen Ende der Verbindungskonstruktion 3 und der Auslassseite des Ladeluftkühlers 2 (niedriger Druck) und somit dem anderen Ende der Verbindungskonstruktion 3 herrscht. Die Verbindungskonstruktion 3 dient somit zweckmäßig zur quasi passiven Kondensatabsaugung und erfordert zweckmäßig keine Klappen oder Ventile.

Der Ladeluftkühler 2 umfasst eine in Figur 1 durch zwei Halbkreispfeile schematisch angedeutete Montageeinrichtung 5 zum Verschwenken des Ladeluftkühlers 2.

Dadurch, dass die Verbindungskonstruktion 3 zumindest abschnittsweise flexibel ausgeführt ist und eine Montageeinrichtung 5 zum Verschwenken des Ladeluftkühlers 2 vorgesehen ist, kann der Ladeluftkühler 2, zweckmäßig inklusive der Auslasskammer 4' und der Einlasskammer 9, zu Reinigungs- und/oder Wartungszwecken verschwenkt werden, ohne den Ladeluftkreis öffnen zu müssen. Nachteilhaft am Öffnen des Ladeluftkreises ist z. B., dass dadurch Schmutz in den Ladeluftkreis gelangen kann. Der Ladeluftkreis umfasst zweckmäßig das Leitungssystem der Ladeluftkühleranordnung 1 zwischen Verbrennungsmotor-Ladeluftkühler-Verbrennungsmotor.

Die Einlasskammer 9 umfasst eine schräge Bodenwandung 6. Die Verbindungskonstruktion 3 mündet in einem unteren Bereich 7, vorzugsweise dem untersten Bereich der schrägen Bodenwandung 6 in der Einlasskammer 9. Alternativ oder ergänzend kann in einer nicht gezeigten Ausführungsform die Einlasskammer 9 eine Sammeltasche für Kondensat aufweisen, z. B. eine Vertiefung, Nische, Mulde, Kammer etc., und die Verbindungskonstruktion 3 kann in oder zumindest benachbart zu der Sammeltasche münden, um daraus Kondensat abzusaugen.

Eine Einlassleitung 8 für zu kühlende Luft mündet zweckmäßig in der Einlasskammer 9. Die Verbindungskonstruktion 3 und die Einlassleitung 8 münden zweckmäßig benachbart zueinander in der Einlasskammer 9.

Der Innendurchmesser der Auslassleitung 4 an der Abzweigstelle A, an der die Verbindungskonstruktion 3 abzweigt, ist vorzugweise zumindest achtmal so groß wie der Innendurchmesser der Verbindungskonstruktion 3.

Die Abzweigstelle A, von der die Verbindungskonstruktion 3 auf der Auslassseite des Ladeluftkühlers 2 abzweigt, ist auf einem höheren Niveau angeordnet als die Mündungsstelle M, an der die Verbindungskonstruktion 3 auf der Einlassseite des Ladeluftkühlers 2 mündet.

Die Verbindungskonstruktion 3 erstreckt sich abschnittsweise siphonförmig und somit im Wesentlichen U-förmig, um eine Siphonfunktion bereitzustellen.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Ladeluftkühleranordnung
- 2: Ladeluftkühler
- 3: Zumindest abschnittsweise flexible Verbindungskonstruktion, insbesondere Verbindungs- und/oder Bypassleitung
- 4: Auslassleitung des Ladeluftkühlers
- 4': Auslasskammer des Ladeluftkühlers
- 5: Montageeinrichtung
- 6: Schräge Wandung
- 7: Unterer Bereich
- 8: Einlassleitung des Ladeluftkühlers
- 9: Einlasskammer des Ladeluftkühlers
- A: Abzweigstelle der Verbindungskonstruktion auf Auslassseite
- M: Mündungsstelle der Verbindungskonstruktion auf Einlassseite

## Patentansprüche

1. Ladeluftkühleranordnung (1) für ein Kraftfahrzeug, vorzugsweise Nutzfahrzeug, mit einem Ladeluftkühler (2), wobei eine zumindest abschnittsweise flexible Verbindungskonstruktion (3) von einer Auslassseite des Ladeluftkühlers (2) abzweigt und auf einer Einlassseite des Ladeluftkühlers (2) mündet, um Kondensat auf der Einlassseite des Ladeluftkühlers (2) abzusaugen, und wobei der Ladeluftkühler (2) eine Montageeinrichtung (5) zum Verschwenken des Ladeluftkühlers (2) umfasst, **dadurch gekennzeichnet, dass**
die zumindest abschnittsweise flexible Verbindungskonstruktion (3) einen flexiblen Schlauch umfasst,
dadurch, dass die Verbindungskonstruktion (3) zumindest abschnittsweise flexibel ausgeführt ist und die Montageeinrichtung (5) zum Verschwenken des Ladeluftkühlers (2) vorgesehen ist, der Ladeluftkühler (2) zu Reinigungs- und/oder Wartungszwecken verschwenkbar ist, ohne den Ladeluftkreis zu öffnen, und
die zumindest abschnittsweise flexible Verbindungskonstruktion (3) abschnittsweise siphonförmig ausgeführt ist und eine Abzweigstelle (A) der zumindest abschnittsweise flexiblen Verbindungskonstruktion (3) auf der Auslassseite des Ladeluftkühlers (2) auf einem höheren Niveau angeordnet ist als eine Mündungsstelle (M) der zumindest abschnittsweise flexiblen Verbindungskonstruktion (3) auf der Einlassseite des Ladeluftkühlers (2).

2. Ladeluftkühleranordnung (1) nach Anspruch 1, **dadurch gekennzeichnet, dass** die Verbindungskonstruktion (3) von einer Auslassleitung (4) des Ladeluftkühlers (2), einer Auslasskammer (4') des Ladeluftkühlers (2) oder von einem Ansaugkrümmer abzweigt, um vorzugsweise Kondensat dorthin abzusaugen.

3. Ladeluftkühleranordnung (1) nach einem der vorhergehenden Ansprüche, **dadurch gekennzeichnet, dass** die Verbindungskonstruktion (3) dazu dient, Kondensat auf der Einlassseite des Ladeluftkühlers (2) zur Auslassseite des Ladeluftkühlers (2) abzusaugen.

4. Ladeluftkühleranordnung (1) nach einem der vorhergehenden Ansprüche, **dadurch gekennzeichnet, dass** der Ladeluftkühler (2) eine Einlasskammer (9) umfasst und die Verbindungskonstruktion (3) in der Einlasskammer (9) mündet, um vorzugsweise Kondensat aus der Einlasskammer (9) abzusaugen.

5. Ladeluftkühleranordnung (1) nach Anspruch 4, **dadurch gekennzeichnet, dass** die Einlasskammer (9) eine schräge Wandung (6) aufweist und die Verbindungskonstruktion (3) in einem unteren Bereich (7) der schrägen Wandung (6) in der Einlasskammer (9) mündet.

6. Ladeluftkühleranordnung (1) nach einem der vorhergehenden Ansprüche, **dadurch gekennzeichnet, dass** der Ladeluftkühler (2), vorzugsweise eine Einlasskammer (9), eine Sammeltasche für Kondensat aufweist und die Verbindungskonstruktion (3) in oder zumindest benachbart zu der Sammeltasche mündet.

7. Ladeluftkühleranordnung (1) nach einem der vorhergehenden Ansprüche, **dadurch gekennzeichnet, dass** die Verbindungskonstruktion (3) und eine Einlassleitung (8) des Ladeluftkühlers (2) benachbart zueinander münden, vorzugsweise in einer Einlasskammer (9).

8. Ladeluftkühleranordnung (1) nach einem der vorhergehenden Ansprüche, **dadurch gekennzeichnet, dass** die Verbindungskonstruktion (3) zur Kondensatabsaugung mittels eines Druckgefälles ausgeführt ist, das insbesondere im Betrieb zwischen der Einlassseite des Ladeluftkühlers (2) und der Auslassseite des Ladeluftkühlers (2) herrscht.

9. Ladeluftkühleranordnung (1) nach einem der vorhergehenden Ansprüche, **dadurch gekennzeichnet, dass** die Verbindungskonstruktion (3) klappen- oder ventilfrei ausgebildet ist.

10. Ladeluftkühleranordnung (1) nach einem der vorhergehenden Ansprüche, **dadurch gekennzeichnet, dass** der Innendurchmesser der Auslassleitung (4) an der Stelle der Auslassleitung (4), von der die Verbindungskonstruktion (3) abzweigt, zumindest achtmal so groß ist wie der Innendurchmesser der Verbindungskonstruktion (3).

11. Ladeluftkühleranordnung (1) nach einem der vorhergehenden Ansprüche, **dadurch gekennzeichnet, dass** die Verbindungskonstruktion (3) abschnittsweise starr ausgeführt ist.

12. Nutzfahrzeug, vorzugsweise Omnibus oder Lastkraftwagen, mit einer Ladeluftkühleranordnung (1) nach einem der vorhergehenden Ansprüche.

## Claims

1. A charge air cooler arrangement (1) for a motor vehicle, preferably a commercial vehicle, having a charge air cooler (2), wherein a connecting structure (3), which is flexible at least in some section or sections, branches off from an outlet side of the charge air cooler (2) and issues on an inlet side of the charge air cooler (2) in order to extract condensate on the inlet side of the charge air cooler (2), and wherein the charge air cooler (2) comprises a mounting device (5) for pivoting the charge air cooler (2), **characterized in that** the connecting structure (3), which is flexible at least in some section or sections, comprises a flexible hose, **in that** the connecting structure (3) is of flexible design at least in some section or sections and the mounting device (5) is provided for pivoting the charge air cooler (2), the charge air cooler (2) can be pivoted for cleaning and/or servicing purposes without opening the charge air circuit, and the connecting structure (3), which is flexible at least in some section or sections, is embodied in the form of a siphon in some section or sections and a branch point (A) of the connecting structure (3), which is flexible at least in some section or sections, on the outlet side of the charge air cooler (2) is arranged at a higher level than a point of issue (M) of the connecting structure (3), which is flexible at least in some section or sections, on the inlet side of the charge air cooler (2).

2. The charge air cooler arrangement (1) according to Claim 1, **characterized in that** the connecting structure (3) branches off from an outlet line (4) of the charge air cooler (2), an outlet chamber (4') of the charge air cooler (2) or an intake manifold, preferably in order to extract condensate **in that** direction.

3. The charge air cooler arrangement (1) according to one of the preceding claims, **characterized in that** the connecting structure (3) is used to extract condensate on the inlet side of the charge air cooler (2) towards the outlet side of the charge air cooler (2).

4. The charge air cooler arrangement (1) according to one of the preceding claims, **characterized in that** the charge air cooler (2) comprises an inlet chamber (9), and the connecting structure (3) issues in the inlet chamber (9), preferably in order to extract condensate from the inlet chamber (9).

5. The charge air cooler arrangement (1) according to Claim 4, **characterized in that** the inlet chamber (9) has an oblique wall (6), and the connecting structure (3) issues in the inlet chamber (9) in a lower region (7) of the oblique wall (6).

6. The charge air cooler arrangement (1) according to one of the preceding claims, **characterized in that** the charge air cooler (2), preferably an inlet chamber (9), has a collecting pocket for condensate, and the connecting structure (3) issues in or at least adjacent to the collecting pocket.

7. The charge air cooler arrangement (1) according to one of the preceding claims, **characterized in that** the connecting structure (3) and an inlet line (8) of the charge air cooler (2) issue adjacent to one another, preferably in an inlet chamber (9).

8. The charge air cooler arrangement (1) according to one of the preceding claims, **characterized in that** the connecting structure (3) is embodied for condensate extraction by means of a pressure gradient, which prevails between the inlet side of the charge air cooler (2) and the outlet side of the charge air cooler (2), particularly during operation.

9. The charge air cooler arrangement (1) according to one of the preceding claims, **characterized in that** the connecting structure (3) is of flap- or valve-free design.

10. The charge air cooler arrangement (1) according to one of the preceding claims, **characterized in that** the inside diameter of the outlet line (4) is at least eight times as large as the inside diameter of the connecting structure (3) at the point of the outlet line (4) from which the connecting structure (3) branches off.

11. The charge air cooler arrangement (1) according to one of the preceding claims, **characterized in that** the connecting structure (3) is embodied so as to be rigid in some section or sections.

12. A commercial vehicle, preferably a bus or a lorry, having a charge air cooler arrangement (1) according to one of the preceding claims.

## Revendications

1. Système de refroidisseur d'air de suralimentation (1) pour un véhicule automobile, de préférence un véhicule utilitaire, avec un refroidisseur d'air de suralimentation (2), dans lequel une structure de raccordement (3) au moins localement flexible est dérivée d'un côté de sortie du refroidisseur d'air de suralimentation (2) et débouche sur un côté d'entrée du refroidisseur d'air de suralimentation (2), afin d'aspirer du condensat sur le côté d'entrée du refroidisseur d'air de suralimentation (2), et dans lequel le refroidisseur d'air de suralimentation (2) comprend un système de montage (5) pour faire pivoter le refroidisseur d'air de suralimentation (2), **caractérisé en ce que**
la structure de raccordement au moins localement flexible (3) comprend un tuyau flexible,
la structure de raccordement (3) est ainsi réalisée de façon au moins localement flexible et le système de montage (5) est prévu pour faire pivoter le refroidisseur d'air de suralimentation (2), le refroidisseur d'air de suralimentation (2) est pivotant pour des besoins de nettoyage et/ou d'entretien sans ouvrir le circuit d'air de suralimentation, et
la structure de raccordement au moins localement flexible (3) est réalisée localement en forme de siphon et un point de dérivation (A) de la structure de raccordement au moins localement flexible (3) est disposé sur le côté de sortie du refroidisseur d'air de suralimentation (2) à un niveau plus élevé qu'un point d'embouchure (M) de la structure de raccordement au moins localement flexible (3) sur le côté d'entrée du refroidisseur d'air de suralimentation (2).

2. Système de refroidisseur d'air de suralimentation (1) selon la revendication 1, **caractérisé en ce que** la structure de raccordement (3) est dérivée d'une conduite de sortie (4) du refroidisseur d'air de suralimentation (2), d'une chambre de sortie (4') du refroidisseur d'air de suralimentation (2) ou d'un collecteur d'aspiration, afin d'y aspirer de préférence du condensat.

3. Système de refroidisseur d'air de suralimentation (1) selon l'une quelconque des revendications précédentes, **caractérisé en ce que** la structure de raccordement (3) sert à aspirer du condensat sur le côté d'entrée du refroidisseur d'air de suralimentation (2) vers le côté de sortie du refroidisseur d'air de suralimentation (2).

4. Système de refroidisseur d'air de suralimentation (1) selon l'une quelconque des revendications précédentes, **caractérisé en ce que** le refroidisseur d'air de suralimentation (2) comprend une chambre d'entrée (9) et la structure de raccordement (3) débouche dans la chambre d'entrée (9), afin d'aspirer de préférence du condensant hors de la chambre d'entrée (9).

5. Système de refroidisseur d'air de suralimentation (1) selon la revendication 4, **caractérisé en ce que** la chambre d'entrée (9) présente une paroi inclinée (6) et la structure de raccordement (3) débouche dans la chambre d'entrée (9) dans une région inférieure (7) de la paroi inclinée (6).

6. Système de refroidisseur d'air de suralimentation (1) selon l'une quelconque des revendications précédentes, **caractérisé en ce que** le refroidisseur d'air de suralimentation (2), de préférence une chambre d'entrée (9), présente une poche de collecte pour du condensat et la structure de raccordement (3) débouche dans ou au moins à proximité de la poche de collecte.

7. Système de refroidisseur d'air de suralimentation (1) selon l'une quelconque des revendications précédentes, **caractérisé en ce que** la structure de raccordement (3) et une conduite d'entrée (8) du refroidisseur d'air de suralimentation (2) débouchent à proximité l'une de l'autre, de préférence dans une chambre d'entrée (9).

8. Système de refroidisseur d'air de suralimentation (1) selon l'une quelconque des revendications précédentes, **caractérisé en ce que** la structure de raccordement (3) est réalisée en vue de l'aspiration de condensat au moyen d'une différence de pression, qui règne en particulier en fonctionnement entre le côté d'entrée du refroidisseur d'air de suralimentation (2) et le côté de sortie d'air de suralimentation (2).

9. Système de refroidisseur d'air de suralimentation (1) selon l'une quelconque des revendications précédentes, **caractérisé en ce que** la structure de raccordement (3) est dépourvue de clapet ou de soupape.

10. Système de refroidisseur d'air de suralimentation (1) selon l'une quelconque des revendications précédentes, **caractérisé en ce que** le diamètre intérieur de la conduite de sortie (4) à l'endroit de la conduite de sortie (4) où la structure de raccordement (3) est dérivée est au moins huit fois plus grand que le diamètre intérieur de la structure de raccordement (3).

11. Système de refroidisseur d'air de suralimentation (1) selon l'une quelconque des revendications précédentes, **caractérisé en ce que** la structure de raccordement (3) est localement rigide.

12. Véhicule utilitaire, de préférence autobus ou camion, avec un système de refroidisseur d'air de suralimentation (1) selon l'une quelconque des revendications précédentes.
